# DEMANDE DE BREVET EUROPEEN

(11) **EP 2 472 189 A2**
(43) Date de publication de la demande: **04.07.2012**
(21) Numéro de dépôt: 11290346.3
(22) Date de dépôt: 26.07.2011
(51) Int. Cl.: F24D 17/00

(54) **Dispositif pour fabriquer de l'eau chaude à bord d'un véhicule**

(30) Priorité: 28.12.2010 EP 10290685
(71) Demandeur: Batselé, Philippe, 11410 Cumiès (FR)
(72) Inventeur: Batselé, Philippe, 11410 Cumiès (FR)

(57) **Abrégé**

Le « greenhotwater » est un dispositif pour fabriquer de l'eau chaude à partir de la combinaison de panneaux photovoltaïques et de capteurs solaires. L'invention concerne un dispositif permettant de fabriquer de l'eau chaude en se passant du moteur thermique d'un véhicule ou d'une source électrique. Il est constitué 1) d'un boîtier comprenant 2) un ou plusieurs panneaux photovoltaïques produisant l'électricité nécessaire à l'action 3) d'une pompe envoyant sous pression de l'eau dans les tuyaux 4) d'un capteur solaire 5) vitré et étanche à l'air où l'eau se réchauffe sous l'action des rayons solaires piégés sous la vitre et circule ensuite jusqu'à 6) un ballon d'eau où elle est stockée.

Le dispositif selon l'invention est destiné à produire de l'eau chaude pour des véhicules légers ou lourds, terrestres, maritimes et aériens.

## Description

La présente invention concerne un dispositif permettant de produire et de distribuer de l'eau chaude sous pression de manière autonome pour les véhicules terrestres, maritimes ou aériens, sans consommation de carburant ni d'électricité. Le système permet aussi de produire de l'électricité pour recharger la ou les batteries du véhicule.

Actuellement la production d'eau chaude est réalisée soit par une résistance électrique soit en récupérant la chaleur produite par le moteur, d'un véhicule terrestre, maritime ou aérien. Une pompe branchée sur la batterie permet d'obtenir l'eau sous pression.

Le système permet de se passer d'une source électrique ou de carburant (essence, diesel, gaz). L'ensemble est compact, assez léger et peut être manipulé par une personne seule. De plus, la pompe intégrée permet d'avoir de l'eau sous pression. Dès que l'on ouvre le robinet, l'eau arrive.

Le système se pose sur le toit d'une caravane, d'un camping-car, d'une voiture ou d'un bateau. Dès que le soleil apparaît et agit sur les panneaux photovoltaïques, la pompe se met en fonction, fait passer l'eau dans les tuyaux du capteur solaire et l'eau chaude circule jusqu'au ballon d'eau où elle est stockée. Les panneaux photovoltaïques produisent plus d'électricité que la pompe n'en requière. L'excédant est utilisé pour charger la ou les batteries du véhicule. Il est intéressant de disposer de ce complément car, dès que des nuages apparaissent, le masque solaire arrête la pompe. C'est alors que la batterie du véhicule, sur lequel le système est installé, prend le relais. De même, une fois le soleil couché, on peut disposer de l'eau chaude et froide sous pression.

Les dessins indexés illustrent l'invention:
La figure n°1 montre une vue en plan du système et de son implantation.
La figure n°2 est une vue en plan du dessus.
La figure n°3 est une vue latérale droite du système.
La figure n°4 est une vue latérale gauche du système.
La figure n°5 est une vue arrière du système.

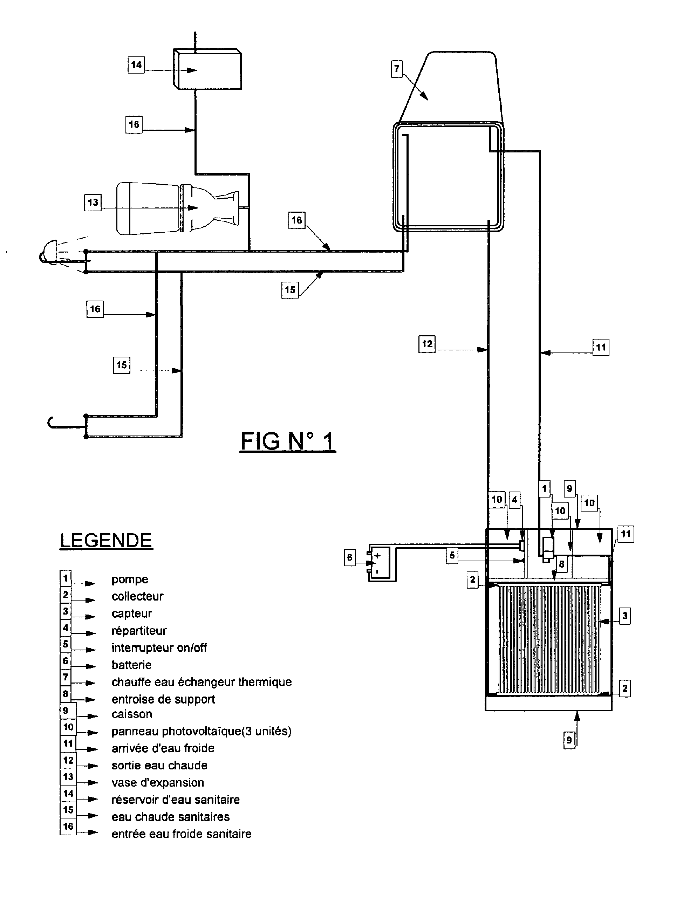

Figure n° 1(1) pompe (2) collecteur (3) capteur (4) répartiteur électrique (5) interrupteur on/off (6) batterie du véhicule (7) chauffe eau échangeur thermique (8) entretoise de support du ou des panneaux photovoltaïques et de leurs charnières (9) caisson plastique (10) 1 ou plusieurs panneaux photovoltaïques (3 unités) (11) arrivée d'eau froide (12) sortie eau chaude (13) vase d'expansion (14) réservoir d'eau sanitaire (15) sortie d'eau chaude sanitaire (16) entrée d'eau froide sanitaire.

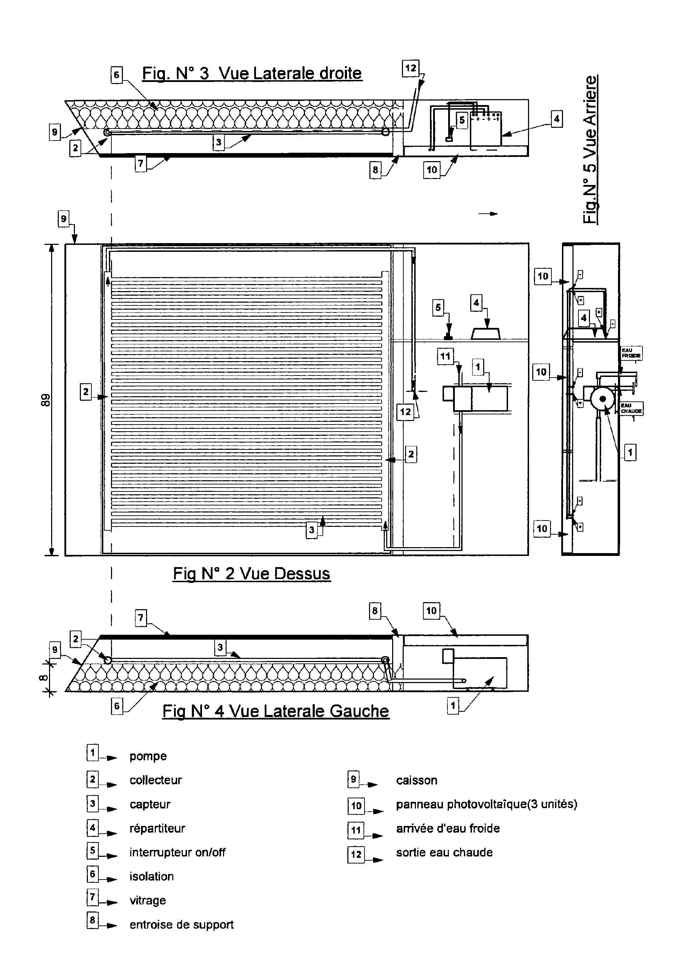

Figure n°2 vues en plan. On y voit (1) pompe de 12 volts de 3.5 ampères (2) collecteur qui permet de relier les tuyaux du capteur (3) capteur composé de tuyaux en polyéthylène de 8 mm de diamètre sur une surface de 85 centimètres carrés minimum (4) répartiteur électrique permettant la gestion et la répartition de la production électrique(5) interrupteur on/off qui permet la mise en fonction de la pompe ou son arrêt. Figure 2 et 3. On y voit (6) isolation qui permet d'obtenir un meilleur rendement (7) vitrage synthétique qui piège les rayons infra rouges (8) entretoise de support du ou des panneaux photovoltaïques et de leurs charnières (9) caisson plastique (10) panneaux photovoltaïques (3 unités) qui ont chacun les caractéristiques suivantes celle-ci peuvent varier selon les panneaux installés: production 1.5 ampère Voc 22.0 V Vmp 17.0 V PM 10 watts (11) arrivée d'eau froide (12) sortie eau chaude. Les panneaux photovoltaïques sont montés sur charnières, ce qui permet l'ouverture du panneau arrière, permettant d'avoir accès aux différents organes (pompe/répartiteur/interrupteur/panneaux photovoltaïques)

Le capteur est étanche afin d'augmenter ses performances thermiques. Il suffit d'installer le capteur autonome sur le toit du véhicule (caravane - camping-car-voiture -bateau), de raccorder à l'aide des connections mâle et femelle le ballon d'eau. Dès que le soleil apparaît, l'eau est chauffée dans les tuyaux de polyéthylènes, la pompe se met en fonction et fait circuler l'eau dans les tuyaux du capteur. Le répartiteur permet de recharger la ou les batteries du véhicule car les capteurs photovoltaïques produisent un excédant d'électricité.

Les dimensions du capteur sont : 130 centimètres de long, 90 centimètres de large et 15 centimètres de haut. La face avant est inclinée afin d'améliorer la pénétration dans l'air et limiter la consommation du véhicule lorsqu'il se déplace. La hauteur du caisson pourra être réduite dans le futur en mettant en oeuvre une pompe moins encombrante. Actuellement, le système permet de produire en une journée ensoleillée 55 litres d'eau à une température de 45 degré (température de départ de l'eau à 20°) tout en rechargeant la batterie du véhicule. Concrètement, il est envisageable d'augmenter le rendement de 12 à 17 % minimum en optimisant certains éléments du capteur. Le dispositif, selon l'invention, est particulièrement destiné à tous type de véhicules terrestre, maritime ou aérien. Il peut également intéresser le domaine militaire ainsi que les organisations humanitaires ou les pays en voie de développement. En effet, par son faible encombrement et sa rapidité de mise en oeuvre, le capteur « eau chaude en toute liberté » permet d'obtenir de l'eau chaude sous pression sans aucune pollution car il fonctionne seul avec le soleil.

En résumé, cette invention est destinée à produire de l'eau chaude de manière nomade et écologique.

## Revendications

1. Dispositif pour fabriquer de l'eau chaude à bord d'un véhicules terrestres, maritimes ou aériens **caractérisé en ce qu'**il comporte 1) un boîtier comprenant 2) un ou plusieurs panneaux photovoltaïques produisant de l'électricité nécessaire à l'action 3) d'une pompe envoyant sous pression de l'eau dans les tuyaux 4) d'un capteur solaire 5) vitré et étanche à l'air où l'eau se réchauffe sous l'action des rayons solaires piégés sous la vitre et circule ensuite jusqu'à 6) un ballon d'eau où elle est stockée.

2. Dispositif selon la revendication 1. **caractérisé en ce que** le boîtier 1) est léger et compact comprend le ou les panneaux photovoltaïques, la pompe, le capteur solaire étanche et un répartiteur d'énergie électrique.

3. Dispositif selon la revendication 1. **caractérisé en ce que** la capteur solaire 4) est équipé à sa base d'une vanne de purge permettant la vidange complète du capteur en cas de gel ou de stockage prolongé.

4. Dispositif selon la revendication 1. est **caractérisé en ce que** le ou les panneaux photovoltaïques sont montés sur un châssis articulé permettant l'accès technique aux différents organes que sont la pompe, aux panneaux photovoltaïques, au répartiteur électrique et à la vanne de purge.

5. Dispositif selon la revendication 1. est **caractérisé en ce que** l'avant du boîtier est profilé afin d'augmenter l'aérodynamisme de l'ensemble.

6. Dispositif selon la revendication 1. est **caractérisé en ce que** le vitrage dispose d'une grande résistance mécanique et par sa capacité à piéger les rayons infrarouges.

7. Dispositif selon la revendication 1. est **caractérisé en ce qu'**il est équipé des fixations permettant de le fixer sur le toit d'un véhicule.

8. Dispositif selon la revendication 1. est **caractérisé en ce qu'**il est équipé de liaisons hydrauliques mâle et femelle pour faciliter la connection de l'eau chaude et froide sans erreur possible.

9. Dispositif selon la revendication 1. est **caractérisé en ce qu'**il est équipé d'un capteur solaire avec des tuyaux souples et léger où l'eau circule. Dispositif selon l'invention est particulièrement destiné à produire de l'eau chaude de manière nomade et écologique.
